# EUROPEAN PATENT APPLICATION

(11) **EP 4 410 578 A1**
(43) Date of publication of application: **07.08.2024**
(21) Application number: 21961940.0
(22) Date of filing: 29.10.2021
(51) Int. Cl.: B60K 1/04, H01M 50/244

(54) **BATTERY AND VEHICLE BODY INTEGRATED STRUCTURE, AND ELECTRIC VEHICLE**

(71) Applicant: Huawei Technologies Co., Ltd., Shenzhen, Guangdong 518129 (CN)
(72) Inventor: LIU, Jian, Shenzhen, Guangdong 518129 (CN); LI, Jingjing, Shenzhen, Guangdong 518129 (CN)
(74) Representative: Epping - Hermann - Fischer
(86) International application number: PCT/CN2021/127686
(87) International publication number: WO 2023/070588

(57) **Abstract**

An integrated battery-to-vehicle-body structure and an electric vehicle are provided. The integrated battery-to-vehicle-body structure includes a vehicle body frame and a battery pack. The vehicle body frame has two rockers that are disposed in parallel and an accommodation space that is located between the two rockers. The battery pack includes an enclosure and a battery cell component and a crossbeam that are disposed inside the enclosure. The crossbeam is connected to the enclosure. After the electric vehicle is assembled as a whole, the enclosure is installed on the rockers, a top part of the enclosure can serve as a vehicle body floor, to simplify a vehicle body structure and reduce a weight of the electric vehicle. In addition, the battery pack being located in the accommodation space, without changing an overall vehicle size, can allow an increased volume of the battery pack, thereby increasing a capacity of the battery pack and improving overall range performance. When a rocker is deformed due to exerted force, the crossbeam presses against and supports the rocker, to prevent the rocker from crushing the battery cell component due to excessive deformation, thereby improving torsional stiffness and bearable longitudinal load of the integrated battery-to-vehicle-body structure and improving security of the electric vehicle.

## Description

### TECHNICAL FIELD

This application relates to the field of new energy vehicle technologies, and in particular, to an integrated battery-to-vehicle-body structure and an electric vehicle.

### BACKGROUND

As new energy vehicles, electric vehicles boast energy saving and environmentally friendliness. An electric vehicle uses a battery pack as a power source. Currently, the battery pack mainly has a packaged structure. To be specific, a cell module is assembled inside a battery enclosure. Therefore, when an electric vehicle is assembled as a whole, a battery pack of a packaged structure can be directly assembled to a vehicle body floor.

During design of an electric vehicle, an actual thickness of a large-capacity battery pack and a ground clearance are considered. Usually, a relatively large ground clearance needs to be set for a vehicle body floor. However, an overall height of the electric vehicle is limited. Therefore, an increased ground clearance for the vehicle body floor results in a reduced passenger space inside the electric vehicle, compromising riding comfort of passengers and security of the vehicle. Therefore, currently, a thickness of a battery pack can hardly be increased for some electric vehicles, and a capacity of the battery pack is relatively low, making it difficult to improve range performance of the vehicles.

### SUMMARY

This application provides an integrated battery-to-vehicle-body structure and an electric vehicle, to simplify a vehicle body structure of the electric vehicle and allow an increased thickness of a battery pack, thereby increasing a capacity of the battery pack and improving overall range performance of the electric vehicle.

According to a first aspect, this application provides an integrated battery-to-vehicle-body structure. The integrated battery-to-vehicle-body structure includes a vehicle body frame and a battery pack. The vehicle body frame has an accommodation space and two rockers. The two rockers are disposed in parallel, and the accommodation space may be located between the two rockers. The battery pack specifically includes an enclosure, a battery cell component, and a crossbeam. The battery cell component and the crossbeam are disposed inside the enclosure. The crossbeam may be fixedly connected to the enclosure, and is perpendicular to the two rockers.

In the integrated battery-to-vehicle-body structure, the battery pack is disposed in the accommodation space. Specifically, the enclosure is installed on the two rockers. The vehicle body frame has the accommodation space that is located between the two rockers. After an electric vehicle is assembled as a whole, the battery pack is also located between the two rockers. Therefore, specifically, when the battery pack is installed, a top part of the enclosure of the battery pack may serve as a vehicle body floor and be used to bear an interior part of the electric vehicle. In this way, a vehicle body floor and a reinforced crossbeam may be omitted, thereby simplifying a vehicle body structure of the electric vehicle and reducing a weight of the electric vehicle.

By using the integrated battery-to-vehicle-body structure, disposing the battery pack in the accommodation space, without changing an overall vehicle size of the electric vehicle, can allow an increased thickness of the battery pack. In this way, the top part of the enclosure of the battery pack may be disposed at a location of a top part of a reinforced crossbeam, to increase a volume of the battery pack, thereby increasing a capacity of the battery pack and improving overall range performance of the electric vehicle. On a premise that the overall vehicle size of the electric vehicle and a size of the battery pack remain unchanged, on the one hand, when the battery pack is disposed in the accommodation space, a relatively large ground clearance can be set for the battery pack. In this way, the electric vehicle can drive through an uneven road surface or a road surface on which a relatively large object is placed, without bumping the battery pack. On the other hand, a vehicle body floor and a reinforced crossbeam may be omitted, thereby expanding a passenger space inside the electric vehicle and improving riding comfort for passengers.

In addition, when a side surface of the electric vehicle is bumped to a specific degree, a rocker deforms toward the battery pack due to external force, making the rocker press against the crossbeam. Making the crossbeam press against and support the rocker can resist against acting force transferred to the battery pack by the rocker. This can prevent the rocker from crushing the battery cell component inside the battery pack due to excessive deformation, thereby improving torsional stiffness and bearable longitudinal load of the integrated battery-to-vehicle-body structure and improving security of the electric vehicle.

To ensure that the crossbeam can support the rockers after the rockers are deformed, the crossbeam is at least partially projected to the rockers along a length direction of the crossbeam. Therefore, when a rocker is deformed due to external force exerted, an end face of the crossbeam may press against the rocker, to transfer acting force of the rocker tail to the crossbeam. This can prevent the enclosure of the battery pack from being deformed or damaged due to crashing, thereby improving security of the electric vehicle.

Specifically, a manner of installing the enclosure of the battery pack on the rockers may be threaded connection, clamping, riveting, or the like. For example, in a specific technical solution, a convex edge is disposed on a side surface that is of the enclosure and that faces a rocker, and the convex edge is provided with a mounting hole. The rocker may also be provided with a screw hole. A bolt passes through the mounting hole of the convex edge and penetrates into the screw hole of the rocker, thereby assembling the convex edge and the rocker together. By using this installation manner, the battery pack can be directly disassembled. This is convenient for repairing and replacing the battery pack in the future if needed.

The battery pack may alternatively include a plurality of crossbeams. A specific quantity and arrangement of these crossbeams may be set based on a size of the electric vehicle, an arrangement of battery cell component, an anti-collision performance requirement of the electric vehicle, or the like. For example, in a specific technical solution, the battery pack may include four crossbeams. Spacings between adjacent crossbeams may be equal or unequal. When being disposed at equidistant intervals, these crossbeams can evenly bear load, thereby enhancing torsional stiffness of the integrated battery-to-vehicle-body structure.

Moreover, a specific material of the crossbeam is not limited either. For example, the crossbeam may be made of an aluminum profile, to reduce a mass of the crossbeam and ensure that the crossbeam is rigid enough to resist collision.

A specific shape of the enclosure is not limited. For example, for some battery packs of a regular structure or a small size, a surface that is of the enclosure and that is used for bearing a vehicle interior part may be a plane structure. Alternatively, for some battery packs of a large size or a specific structure, the surface may have a protrusion portion. The protrusion portion protrudes in a direction away from the crossbeam, to accommodate a part of the battery cell component.

In addition, an assembly clearance may further exist between the battery pack and the rockers. The assembly clearance may be filled with a sealant or a sealing strip, to prevent moisture, dust, and the like from entering the electric vehicle from the assembly clearance.

In a specific technical solution, a width d of the assembly clearance may meet: d ≥ 5 mm. When a rocker is slightly deformed, the crossbeam can also press against the rocker as soon as possible, to transfer collision force exerted on the rocker to the crossbeam. In addition, an assembly clearance between a rocker and a battery pack is usually from 25 mm to 40 mm. However, in this application, the assembly clearance can be reduced to 5 mm at minimum, thereby increasing a width of the battery pack. A smaller width d of the assembly clearance means that a larger width can be set for the battery pack, to increase a volume of the battery pack, thereby increasing a capacity of the battery pack and improving overall range performance of the electric vehicle.

The integrated battery-to-vehicle-body structure may further include a reinforcer. The reinforcer connects the rockers and the enclosure of the battery pack. This can increase connection reliability between the rockers and the battery pack, and further allows a part of external collision force to be transferred to the reinforcer when a rocker is bumped, thereby reducing a degree of deformation of the rocker and improving torsional stiffness of the integrated battery-to-vehicle-body structure. According to a second aspect, this application provides an electric vehicle. The electric vehicle includes the integrated battery-to-vehicle-body structure according to the first aspect. A vehicle body frame has an accommodation space that is located between two rockers. After the electric vehicle is assembled as a whole, a battery pack is also located between the two rockers. Therefore, specifically, when the battery pack is installed, a top part of an enclosure of the battery pack may serve as a vehicle body floor and be used to bear an interior part of the electric vehicle. In this way, a vehicle body floor and a reinforced crossbeam that are present in some vehicle models may be omitted, thereby simplifying a vehicle body structure of the electric vehicle and reducing a weight of the electric vehicle.

In addition, disposing the battery pack in the accommodation space, without changing an overall vehicle size of the electric vehicle, can allow an increased thickness of the battery pack. In this way, the top part of the enclosure of the battery pack may be disposed at a location of a top part of a reinforced crossbeam, to increase a volume of the battery pack, thereby increasing a capacity of the battery pack and improving overall range performance of the electric vehicle. On a premise that the overall vehicle size of the electric vehicle and a size of the battery pack remain unchanged, on the one hand, when the battery pack is disposed in the accommodation space, a relatively large ground clearance can be set for the battery pack. In this way, the electric vehicle can drive through an uneven road surface or a road surface on which a relatively large object is placed, without bumping the battery pack. On the other hand, a vehicle body floor and a reinforced crossbeam may be omitted, thereby expanding a passenger space inside the electric vehicle and improving riding comfort for passengers.

In addition, when a side surface of the electric vehicle is bumped to a specific degree, a rocker deforms toward the battery pack due to external force, making the rocker press against a crossbeam. Making the crossbeam press against and support the rocker can resist against acting force transferred to the battery pack by the rocker. This can prevent the rocker from crushing a battery cell component inside the battery pack due to excessive deformation, thereby improving torsional stiffness and bearable longitudinal load of the integrated battery-to-vehicle-body structure and improving security of the electric vehicle.

The electric vehicle may further include a vehicle interior part. The vehicle interior part is installed on the crossbeam of the battery pack. The crossbeam of the battery pack can resist against side collision, and also can support the vehicle interior part, thereby simplifying a structure of the electric vehicle and reducing a weight of the electric vehicle.

### BRIEF DESCRIPTION OF THE DRAWINGS

FIG. 1 is a schematic diagram of a structure of an electric vehicle according to an embodiment of this application;
FIG. 2 is a schematic diagram of a structure of an integrated battery-to-vehicle-body structure according to an embodiment of this application;
FIG. 3 is a schematic diagram of a structure of a vehicle body frame according to an embodiment of this application;
FIG. 4 is a schematic diagram of a structure of a battery pack according to an embodiment of this application;
FIG. 5 is a sectional view of the integrated battery-to-vehicle-body structure in FIG. 2 along an A-A direction;
FIG. 6 is a schematic diagram of another structure of a battery pack according to an embodiment of this application;
FIG. 7 is a schematic diagram of another structure of a battery pack according to an embodiment of this application;
FIG. 8 is a schematic diagram of another structure of a battery pack according to an embodiment of this application; and
FIG. 9 is a schematic diagram of another structure of an electric vehicle according to an embodiment of this application.

### Reference numerals:

| | | | |
|---|---|---|---|
| 10: | electric vehicle; | 11: | integrated battery-to-vehicle-body structure; |
| 12: | vehicle interior part | 111: | vehicle body frame; |
| 112: | battery pack; | 113: | accommodation space; |
| 14: | rocker; | 115: | enclosure; |
| 116: | reinforcer; | 117: | crossbeam; |
| 118: | convex edge. | | |

### DETAILED DESCRIPTION

To make the objectives, technical solutions, and advantages of this application clearer, the following further describes this application in detail with reference to the accompanying drawings. A vehicle body floor structure of an electric vehicle mainly includes two rockers that extend in a longitudinal direction and a floor and a reinforced crossbeam that are disposed between the two rockers. The reinforced crossbeam is perpendicular to the rockers and is fixedly connected to the rockers, and is used to improve torsional stiffness and bearable longitudinal load of the vehicle body floor structure.

During overall assembly of the electric vehicle, a battery pack is installed at a bottom part of a floor of the vehicle body floor structure. To ensure security of the battery pack during driving of the electric vehicle, a relatively large ground clearance needs to be set for the battery pack, so that the battery pack is not prone to bump into the ground or an object on the ground. Therefore, a vehicle body floor also needs to be designed to have a relatively large ground clearance. In addition, a larger capacity of the battery pack also means a larger volume of the battery pack. If an endurance mileage of the electric vehicle needs to be increased, a size of the battery pack also needs to be increased, for example, by increasing at least one of a thickness, a width, and a length of the battery pack.

However, to ensure comfort for passengers, an internal space of the electric vehicle further needs to be increased as far as possible. Therefore, on the premise that an overall vehicle height remains unchanged, a need to decrease a thickness of the vehicle body floor structure and the size and ground clearance of the battery pack conflicts with increasing the capacity of the battery pack.

In actual design of an electric vehicle, a volume of a battery pack is limited. As a result, a capacity of the battery pack cannot be effectively increased. This is unfavorable for improving an endurance mileage of the electric vehicle. In addition, a vehicle body floor structure is configured to support a vehicle body and an interior part of the electric vehicle, and a reinforced crossbeam is configured to resist against side collision. Therefore, the vehicle body floor structure needs to be correspondingly set to have specific strength, and cannot be greatly decreased in size. This also limits an increase of the volume of the battery pack.

Therefore, this application provides an integrated battery-to-vehicle-body structure and an electric vehicle, to simplify a vehicle body structure of the electric vehicle and allow an increased thickness of a battery pack, thereby increasing a capacity of the battery pack and improving overall range performance of the electric vehicle.

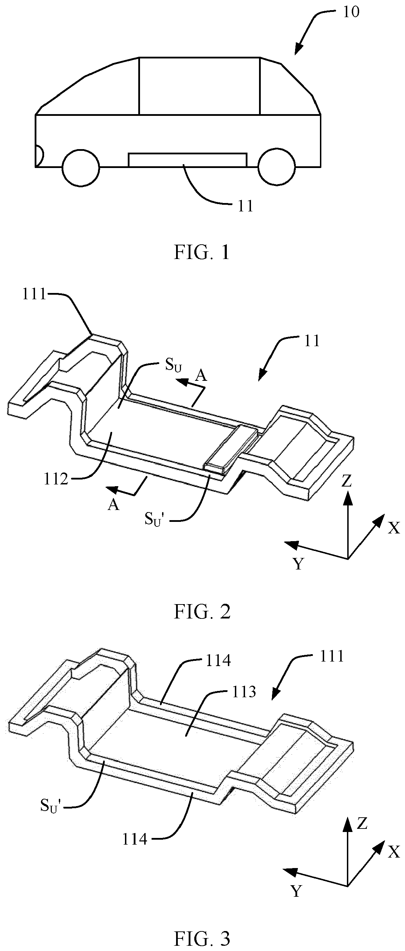

FIG. 1 is a schematic diagram of a structure of an electric vehicle according to an embodiment of this application. As shown in FIG. 1, the electric vehicle 10 includes an integrated battery-to-vehicle-body structure 11, a chassis (not illustrated in the figure), an electric drive control system (not illustrated in the figure), an assistant system (not illustrated in the figure), and the like. The integrated battery-to-vehicle-body structure 11 includes a vehicle body frame and a battery pack. The battery pack is installed on the vehicle body frame. In this embodiment of this application, a specific type of the electric vehicle 10 is not limited. For example, the electric vehicle 10 may be a vehicle such as a sport utility vehicle (Sport Utility Vehicle, SUV), a multi-purpose vehicle (multi-purpose vehicle, MPV), a truck, a bus, a passenger car, or a sanitation vehicle. It should be noted that in this embodiment of this application, the electric vehicle 10 is a vehicle that uses a battery as a power source in all working conditions or some working conditions. For example, the electric vehicle 10 may be a hybrid vehicle (hybrid vehicle), a pure electric vehicle, a hydrogen fuel cell vehicle, a plug-in hybrid electric vehicle, or an extended-range hybrid electric vehicle. This is not limited in this application.

The following describes in detail the integrated battery-to-vehicle-body structure 11 of this application with reference to accompanying drawings.

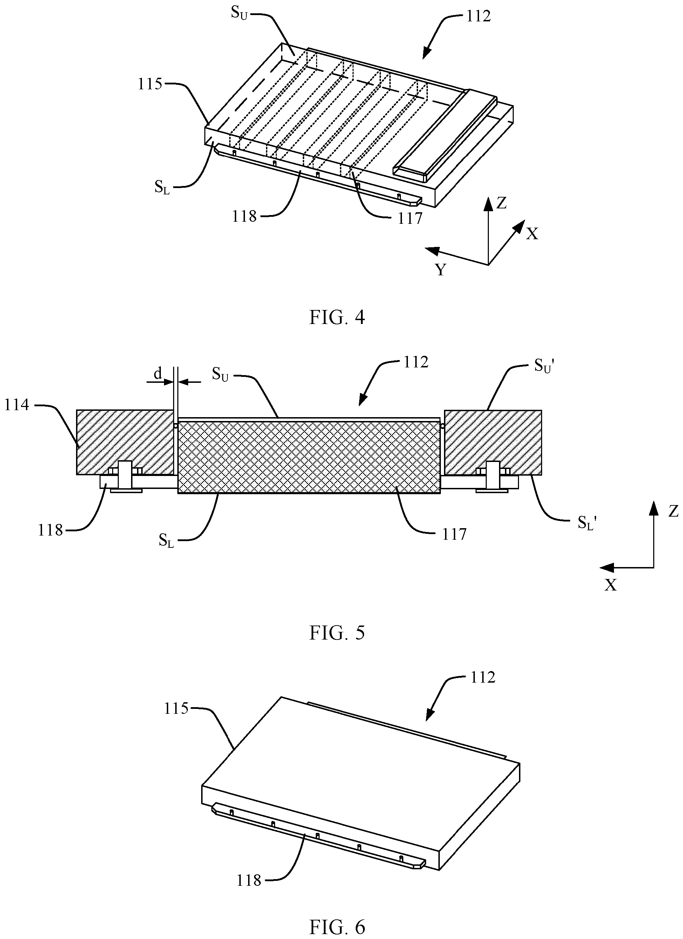

FIG. 2 is a schematic diagram of a structure of an integrated battery-to-vehicle-body structure according to an embodiment of this application. The integrated battery-to-vehicle-body structure 11 includes a vehicle body frame 111 and a battery pack 112 that is installed on the vehicle body frame 111. FIG. 3 is a schematic diagram of a structure of the vehicle body frame according to this embodiment of this application. The vehicle body frame 111 has an accommodation space 113. The vehicle body frame 111 includes two rockers 114. The two rockers 114 extend along a longitudinal direction Y and are disposed in parallel. The accommodation space 113 is located between the two rockers 114. FIG. 4 is a schematic diagram of a structure of the battery pack according to this embodiment of this application. The battery pack 112 includes an enclosure 115, a battery cell component (not illustrated), and a crossbeam 117 (indicated by dotted lines). The battery cell component and the crossbeam 117 are disposed inside the enclosure 115. The crossbeam 117 is fixedly connected to the enclosure 115.

It should be noted that in this embodiment of this application, the longitudinal direction Y is a direction along a vehicle length of an electric vehicle 10, for example, a direction from a vehicle head to a vehicle tail, or a direction from the vehicle tail to the vehicle head. A transverse direction X is a direction along a vehicle width of the electric vehicle 10, for example, a direction from a driver's seat to a front passenger seat, or a direction from the front passenger seat to the driver's seat. A height direction Z is a direction along a vehicle height of the electric vehicle 10, for example, a direction from a vehicle top to a vehicle bottom, or a direction from the vehicle bottom to the vehicle top.

As shown in FIG. 3, in this application, the accommodation space 113 is a space between the two rockers 114. Specifically, for example, the accommodation space 113 may be a hollow portion between the two rockers 114 in FIG. 3. Alternatively, the accommodation space 113 may be a hollow portion of a concave structure. For example, in a specific embodiment, the integrated battery-to-vehicle-body structure 11 may further include a thin plate located between the two rockers 114. The thin plate is connected to the two rockers 114 to form the concave structure. A hollow portion enclosed by the thin plate and the two rockers 114 is the accommodation space 113. An opening of the concave structure may face upward or face downward.

After the electric vehicle 10 is assembled as a whole, the enclosure 115 of the battery pack 112 is installed on the rockers 114, so that the battery pack 112 is also located between the two rockers 114. A top part of the enclosure 115 may serve as a vehicle body floor and be used to bear an interior part of the electric vehicle 10. For example, a vehicle seat part of the electric vehicle 10 may be installed on the top part of the enclosure 115. In addition, the crossbeam 117 of the battery pack 112 may be perpendicular to the rockers 114. In other words, the crossbeam 117 extends along the transverse direction X of the electric vehicle 10. When the electric vehicle 10 is subject to lateral collision, a rocker 114 deforms toward a direction facing the battery pack 112 due to external force exerted, so that the rocker 114 presses against the crossbeam 117. In this way, the crossbeam 117 resists against continued deformation of the rocker 114, to prevent the rocker 114 from crushing the battery cell component of the battery pack 112, thereby further improving torsional stiffness and bearable longitudinal load of the integrated battery-to-vehicle-body structure 11.

Therefore, the integrated battery-to-vehicle-body structure 11 may serve as a vehicle body floor structure of the electric vehicle 10. The top part of the enclosure 115 of the battery pack 112 is used as the vehicle body floor, and the crossbeam 117 of the battery pack 112 is used as a lateral reinforcement structure, to increase torsional stiffness of the vehicle body floor structure. In some vehicle models, a vehicle body frame has a reinforced crossbeam and floor, and a battery pack is installed on the floor. In this application, the reinforced crossbeam and floor do not need to be disposed, thereby simplifying a vehicle body structure of the electric vehicle 10 and reducing a weight of the electric vehicle 10.

In addition, generally, a thickness of a reinforced crossbeam is from 30 mm to 40 mm, or may be greater than 40 mm. Therefore, in this application, increasing a thickness of the battery pack 112 can increase a total thickness of a vehicle body floor 012 and a reinforced crossbeam 013. In other words, when a ground clearance of the battery pack 112 remains unchanged, the top part of the enclosure 115 of the battery pack 112 may be disposed at a location of a top part of the reinforced crossbeam. In addition, a thickness of the crossbeam 117 along the height direction Z may also increase as the thickness of the battery pack 112 increases.

Disposing the battery pack 112 in the accommodation space 113, without changing an overall vehicle size of the electric vehicle 10, can allow an increased thickness of the battery pack 112, to increase a volume of the battery pack 112, thereby increasing a capacity of the battery pack 112 and improving overall range performance of the electric vehicle 10. In addition, the integrated battery-to-vehicle-body structure 11 allows electric vehicles of different sizes to use battery packs of the same size. For example, a sedan car may use a battery pack of an SUV. In this way, battery packs of the same size can be used in different vehicle models. This can improve universal applicability of the battery packs in different vehicle models, and also can reduce manufacturing costs and time of an electric vehicle.

On a premise that the overall vehicle size of the electric vehicle 10 and a size of the battery pack 112 remain unchanged, on the one hand, a relatively large ground clearance can be set for the battery pack 112. In this way, the electric vehicle 10 can drive through an uneven road surface or a road surface on which a relatively large object is placed, without bumping the battery pack 112. On the other hand, a vehicle body floor and a reinforced crossbeam that are present in some vehicle models may be omitted, thereby expanding a passenger space inside the electric vehicle 10 and improving riding comfort for passengers.

It should be noted that in this embodiment of this application, for ease of description, nouns of locality such as upper, lower, top, and bottom are introduced. These nouns of locality are merely intended for more briefly describing and helping readers locate a location of a described object in a picture, rather than specifically limiting a location and an orientation of the indicated object. For example, an upper surface of the battery pack 112 is a surface on a side that is of the battery pack 112 and that is away from the ground after the electric vehicle 10 is assembled as a whole, for example, an upper surface Su shown in FIG. 2 and FIG. 4. A lower surface of the battery pack 112 is a surface on a side that is of the battery pack 112 and that is close to the ground after the electric vehicle 10 is assembled as a whole, for example, a lower surface S_{L} shown in FIG. 4. An upper surface of a rocker 114 is a surface on a side that is of the rocker 114 and that is away from the ground after the electric vehicle 10 is assembled as a whole, for example, an upper surface Su' shown in FIG. 2 and FIG. 3. A lower surface of the rocker 114 is a surface S_{L}' on a side that is of the rocker 114 and that is close to the ground after the electric vehicle 10 is assembled as a whole. For another example, the top part of the enclosure 115 is a part that is of the enclosure 115 and that is away from the ground after the electric vehicle 10 is assembled as a whole. A bottom part of the enclosure 115 is a part that is of the enclosure 115 and that is close to the ground after the electric vehicle 10 is assembled as a whole.

A specific installation manner between the battery pack 112 and the rockers 114 is not limited. For example, as shown in FIG. 4, a convex edge 118 may be provided on a side face that is of the enclosure 115 of the battery pack 112 and that faces a rocker 114. The convex edge 118 may be detachably connected to the rocker 114. For example, the convex edge 118 may be joined with the rocker 114 by using a bolt, or the convex edge 118 may be clamped or riveted with the rocker 114. In a specific embodiment, a mount hole is provided on both the lower surface of the rocker 114 and the convex edge 118. A bolt passes through the mounting hole of the convex edge 118 and penetrates into the screw hole of the rocker 114, to fixedly connect the convex edge 118 and the rocker 114.

FIG. 5 is a sectional view of the integrated battery-to-vehicle-body structure in FIG. 2 along an A-A direction. An assembly clearance may exist between the battery pack 112 and the rockers 114. The clearance not only can ensure that the battery pack 112 does not collide with the rockers 114 when the rockers 114 are not deformed, but also can make the crossbeam 117 of the battery pack 112 press against and support a rocker 114 when the rocker 114 is deformed. After the electric vehicle 10 is assembled as a whole, the top part of the enclosure 115 of the battery pack 112 serves as the vehicle body floor. Therefore, an upper surface of the enclosure 115 faces an internal space of the electric vehicle 10. To prevent moisture, dust, and the like from entering the electric vehicle 10 from the assembly clearance, the assembly clearance may be provided with a sealant or a sealing strip. Specifically, the sealant or the sealing strip may be disposed between a side surface of the battery pack 112 and side surfaces of the rockers 114. Alternatively, the sealant or the sealing strip may be disposed between an upper surface of the convex edge 118 and the lower surfaces of the rockers 114.

It should be noted that in embodiments of this application, pressing against may be direct contact or may be indirect contact. For example, in the foregoing embodiment, the crossbeam 117 pressing against a rocker 114 means that the crossbeam 117 is in direct contact with the enclosure 115, and the enclosure 115 is in direct contact with the rocker 114.

A specific size of the assembly clearance is not limited. For example, a width d of the assembly clearance may meet: d > 5 mm. To be specific, a minimum spacing between a side surface of the battery pack 112 and a rocker 114 is 5 mm. When a rocker 114 is deformed, the crossbeam 117 can also press against the rocker 114 as soon as possible, to transfer collision force exerted on the rocker 114 to the crossbeam 117, thereby reducing a degree of deformation of the rocker 114. In addition, a smaller width d of the assembly clearance can allow for an increased width of the battery pack 112, so that a volume of the battery pack 112 can be increased, thereby increasing a capacity of the battery pack 112 and improving overall range performance of the electric vehicle 10. In some other embodiments of this application, the width d of the assembly clearance may alternatively be smaller than 5 mm, if permitted by assembly precision, to further increase a width of the battery pack 112.

A shape of the enclosure 115 of the battery pack 112 may vary with a structure design of the battery cell component. For example, for some battery packs 112 of a large size or a specific structure, the top part of the enclosure 115 may alternatively be a protrusion portion, as shown in FIG. 4. The protrusion portion protrudes in a direction away from the crossbeam 117, to accommodate a part of the battery cell component. Alternatively, as shown in FIG. 6, for some battery packs 112 of a regular structure or a small size, the top part of the enclosure 115 may be a plane structure.

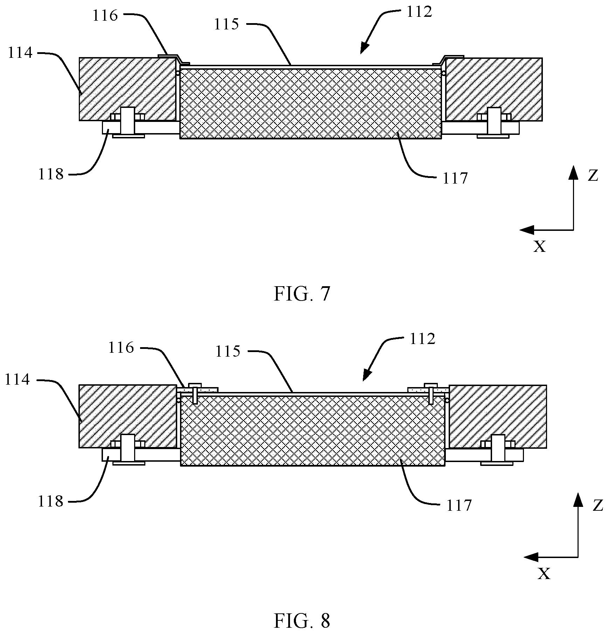

FIG. 7 is a schematic diagram of another structure of the integrated battery-to-vehicle-body structure. To enhance connection reliability between the rockers 114 and the battery pack 112, the integrated battery-to-vehicle-body structure 11 may further include a reinforcer 116. The reinforcer 116 connects to the rockers 114 and the enclosure 115 of the battery pack 112. This can increase connection reliability between the rockers 114 and the battery pack 112, and further allows a part of external collision force to be transferred to the reinforcer 116 when a rocker 114 is bumped, thereby reducing a degree of deformation of the rocker 114 and improving torsional stiffness of the integrated battery-to-vehicle-body structure 11.

A specific quantity of reinforcers 116 is not limited, and for example, may be the same as or different from a quantity of crossbeams 117. Alternatively, for each rocker 114, reinforcers 116 of the same quantity as crossbeams 117 may be disposed between the rocker 114 and the enclosure 115.

In addition, a specific location for disposing the reinforcer 116 may not be limited either. For example, in a specific embodiment, the reinforcer 116 may connect a side surface of a rocker 114 and a side surface of the enclosure 115. As shown in FIG. 7, in another specific embodiment, the reinforcer 116 may connect the upper surfaces of the rockers 114 and the upper surface of the enclosure 115. The reinforcer 116 may assume a Z shape. FIG. 8 is a schematic diagram of another structure of the integrated battery-to-vehicle-body structure. As shown in FIG. 8, the reinforcer 116 may alternatively connect a side surface of a rocker 114 and the upper surface of the enclosure 115. The reinforcer 116 is fastened to the enclosure 115 by using a bolt.

The reinforcer 116 may be in the shape of a strip, a plate, or a beam. This is not specifically limited in this application.

The battery pack 112 may include one or more crossbeams 117. For example, there may be three, four, six, or seven crossbeams 117. A specific quantity may be set based on a size of the electric vehicle 10, an arrangement of the battery cell component, an anti-collision performance requirement of the electric vehicle 10, or the like. Spacings between adjacent crossbeams 117 are not limited, and may be equal or unequal. When being disposed at equidistant intervals, these crossbeams 117 can evenly bear load, thereby enhancing torsional stiffness of the integrated battery-to-vehicle-body structure 11.

The crossbeam 117 may be made of an aluminum profile. This can reduce a mass of the crossbeam 117, and also ensures high stiffness and strength of the crossbeam 117, so that the crossbeam 117 has a good anti-collision effect. This mitigates a phenomenon in which the battery pack 112 is crushed due to deformation of a rocker 114, thereby improving security of the electric vehicle 10. Similarly, to enhance stiffness and strength of the vehicle body frame 111 and reduce a mass of the vehicle body frame 111, the vehicle body frame 111 may also be made of an aluminum profile. A specific fixed connection location and manner between the crossbeam 117 and the enclosure 115 are not limited. For example, an end portion of the crossbeam 117 may be fixedly connected to the enclosure 115, for example, through threaded connection, bonding, welding, or another manner. Alternatively, an upper surface of the crossbeam 117 may be fixedly connected to an inner surface of the top part of the enclosure 115, for example, through threaded connection, bonding, welding, or another manner.

Refer to FIG. 5 again. To ensure that the crossbeam 117 can press against and support the rockers 114 when the rockers 114 are deformed due to force exerted, the crossbeam 117 can be at least partially projected to the rockers 114 along a length direction of the crossbeam 117 (namely the transverse direction X). In other words, when the crossbeam 117 extends along the transverse direction X, an end face of the crossbeam 117 can at least partially in contact with a rocker 114. Specifically, in a specific embodiment, along the height direction Z of the electric vehicle 10, the upper surface of the crossbeam 117 is located between the upper surfaces and the lower surfaces of the rockers 114, and a lower surface of the crossbeam 117 may be located between the upper surfaces and the lower surfaces of the rockers 114. In this embodiment, when a rocker 114 is deformed, an end face of the crossbeam 117 can completely press against the rocker 114. This increases an area of contact between the crossbeam 117 and the rocker 114, thereby increasing an area of a thrust surface of the crossbeam 117. When the rocker 114 transfers a specific amount of acting force to the crossbeam 117, this solution can achieve a small intensity of pressure on the crossbeam 117, thereby improving stiffness of the integrated battery-to-vehicle-body structure 11. In another specific embodiment, the upper surface of the crossbeam 117 is located between the upper surfaces and the lower surfaces of the rockers 114, and a lower surface of the crossbeam 117 is located on a side that is of the lower surfaces of the rockers 114 and that is away from the upper surfaces of the rockers 114. In other words, the lower surface of the crossbeam 117 may be located beneath the lower surfaces of the rockers 114. When a rocker 114 is deformed, an end face of the crossbeam 117 can partially press against the rocker 114, to resist against acting force transferred from the rocker 114. In this embodiment, the lower surface of the crossbeam 117 may be located beneath the lower surfaces of the rockers 114. In this way, a relatively large thickness can be set for the battery pack 112, to increase a volume of the battery pack 112, thereby increasing a capacity of the battery pack 112 and improving overall range performance of the electric vehicle 10.

In a specific embodiment, the upper surface of the enclosure 115 of the battery pack 112 may be on a level with the upper surfaces of rockers 114, and a sealant or a sealing strip may be disposed between the upper surface of the enclosure 115 and the upper surfaces of rockers 114. In this embodiment, the upper surface of the crossbeam 117 is fixedly connected to the top part of the enclosure 115. The lower surface of the crossbeam 117 may be on a level with the lower surfaces of rockers 114, or the lower surface of the crossbeam 117 may be located beneath of the lower surfaces of rockers 114 and is fixedly connected to the bottom part of the enclosure 115. This on the one hand can increase a thickness of the crossbeam 117 to improve stiffness of the crossbeam 117, and on the other hand may also maximally utilize space of the accommodation space 113, to achieve a larger volume for the battery pack 112.

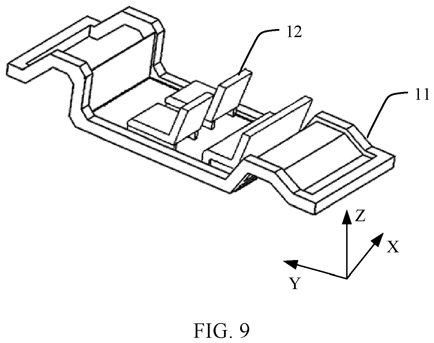

FIG. 9 is a schematic diagram of another structure of the electric vehicle according to this embodiment of this application. As shown in FIG. 9, the electric vehicle 10 may include a vehicle interior part 12. The vehicle interior part 12 is installed on the integrated battery-to-vehicle-body structure 11.

Specifically, an installation manner of the vehicle interior part 12 is not limited, and may be, for example, threaded connection, clamping, bonding, riveting, or the like. For example, in a specific embodiment, the vehicle interior part 12 is installed on the enclosure 115 of the battery pack 112 by using a bolt. The bolt may pass through the enclosure 115 and be fastened to the crossbeam 117, so that the crossbeam 117 and the enclosure 115 bear the vehicle interior part 12 together. In addition, the vehicle interior part 12 may pass through the enclosure 115 and be installed on the crossbeam 117, so that the crossbeam 117 supports the vehicle interior part 12. Alternatively, the vehicle interior part 12 may be directly fastened to the enclosure 115.

The vehicle interior part 12 may be a vehicle seat part, an auxiliary dashboard system, a guard board, or the like. Using a vehicle seat part as an example, the vehicle seat part may include a vehicle seat body and a sliding bracket. The sliding bracket is fastened to the crossbeam 117 of the battery pack. The vehicle seat body is connected to the sliding bracket and can slide along the sliding bracket. By using this type of vehicle seat part, a passenger can adjust a location of the vehicle seat body as needed, to improve comfort.

Terms used in the foregoing embodiments are merely intended to describe particular embodiments, but are not intended to limit this application. As used in the specification and appended claims of this application, singular expressions "one", "a", "the", "the foregoing", "this", and "the one" are also intended to include expressions such as "one or more", unless the contrary is clearly indicated in its context.

Reference to "an embodiment", "some embodiments", or the like described in this specification indicates that one or more embodiments of this application include a specific feature, structure, or characteristic described with reference to the embodiments. Therefore, statements such as "in an embodiment", "in another embodiment", "in some embodiments", "in other embodiments", and "in some other embodiments" that appear at different places in this specification do not necessarily mean reference to a same embodiment, instead, they mean "one or more but not all of embodiments", unless otherwise specifically emphasized. The terms "include", "comprise", "have", and their variants all mean "include without being limited to", unless otherwise specifically emphasized.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An integrated battery-to-vehicle-body structure, comprising a vehicle body frame and a battery pack, wherein
the vehicle body frame has an accommodation space and two rockers, the two rockers are disposed in parallel, and the accommodation space is located between the two rockers; and
the battery pack is disposed in the accommodation space, and the battery pack comprises an enclosure, a battery cell component, and a crossbeam, wherein the battery cell component and the crossbeam are disposed inside the enclosure, the crossbeam is fixedly connected to the enclosure, the enclosure is installed on the two rockers, and the crossbeam is perpendicular to the two rockers.

2. The integrated battery-to-vehicle-body structure according to claim 1, wherein the crossbeam is at least partially projected to the rockers along a length direction of the crossbeam.

3. The integrated battery-to-vehicle-body structure according to claim 1 or 2, wherein a convex edge is disposed on a side surface that is of the enclosure and that faces a rocker, and the convex edge is in threaded connection with the rocker.

4. The integrated battery-to-vehicle-body structure according to any one of claims 1 to 3, wherein the battery pack comprises a plurality of crossbeams.

5. The integrated battery-to-vehicle-body structure according to any one of claims 1 to 4, wherein the crossbeam is an aluminum profile.

6. The integrated battery-to-vehicle-body structure according to any one of claims 1 to 5, wherein a surface that is of the enclosure and that is used for bearing a vehicle interior part is a plane; or the surface has a protrusion portion that protrudes in a direction away from the crossbeam.

7. The integrated battery-to-vehicle-body structure according to any one of claims 1 to 6, wherein an assembly clearance exists between the battery pack and the rockers, and the assembly clearance is filled with a sealant or a sealing strip.

8. The integrated battery-to-vehicle-body structure according to claim 7, wherein a width d of the assembly clearance is greater than or equal to 5 mm.

9. The integrated battery-to-vehicle-body structure according to any one of claims 1 to 8, further comprising a reinforcer, wherein the reinforcer connects the rockers and the enclosure of the battery pack.

10. An electric vehicle, comprising the integrated battery-to-vehicle-body structure according to any one of claims 1 to 9.

11. The electric vehicle according to claim 10, further comprising a vehicle interior part, wherein the vehicle interior part is installed on a crossbeam of the battery pack.
